# EUROPEAN PATENT APPLICATION

(11) **EP 3 425 273 A1**
(43) Date of publication of application: **09.01.2019**
(21) Application number: 16892627.7
(22) Date of filing: 02.05.2016
(51) Int. Cl.: F22B 37/10, F16L 57/00

(54) **BOILER PIPE REINFORCING DEVICE AND BOILER PIPE REINFORCING METHOD**

(30) Priority: 04.03.2016 JP 2016042159
(71) Applicant: The Chugoku Electric Power Co., Inc., Hiroshima-shi, Hiroshima 730-8701 (JP)
(72) Inventor: MATSUMURA, Hideo, Hiroshima-shi Hiroshima 730-8701 (JP); NISHIDA, Hidetaka, Hiroshima-shi Hiroshima 730-8701 (JP)
(74) Representative: Osha Liang
(86) International application number: PCT/JP2016/063547
(87) International publication number: WO 2017/149788

(57) **Abstract**

[Solution] A boiler tube reinforcement device is configured to reinforce a boiler tube. The boiler tube includes a first boiler tube, a second boiler tube, and a weld portion. The weld portion joins edges of the first boiler tube and the second boiler tube together. The boiler tube reinforcement device includes: a sheet-shaped first steel plate configured to be wrapped in a region including the weld portion of the boiler tube, to reinforce the boiler tube. The first steel plate includes a plurality of bending portions. The bending portions are formed along a longitudinal direction of the boiler tube and formed at regular intervals along a circumferential direction of the boiler tube, so that the first steel plate is easily wrapped in the region of the boiler tube.

## Description

### [Technical Field]

The present disclosure relates to a boiler tube reinforcement device and a boiler tube reinforcement method.

### [Background Art]

For example, a boiler for power generation that is installed in a thermal power plant to rotate a turbine includes: an economizer that preheats boiler feed water; a water-cooled wall that forms a housing of the boiler and converts the boiler feed water into saturated steam; a superheater that further heats the saturated steam to be converted into superheated steam; a reheater that reheats steam from the turbine to be supplied to the turbine again; pipes that guide steam from the superheater and reheater to a steam turbine; and the like. The above pipes that guide steam from the superheater and reheater to the steam turbine are constituted by boiler tubes made of heat-resistant steel (for example, low-alloy steel) . When the boiler for power generation is activated, high temperature and high pressure steam flows through the boiler tubes, and when the boiler for power generation is halted, the high temperature and high pressure steam flowing through the boiler tubes stop flowing. That is, in association with the activation and halt of the boiler for power generation, thermal stress is created in the boiler tubes . When the boiler for power generation continues to be used over a long period of time, creep-fatigue damage is created in the boiler tubes due to the thermal stress, which may cause deformation such as an increase in diameter of the boiler tubes, occurrence of deformation in a weld portion, and the like. Thus, to prevent an accident caused by deterioration of such a boiler tube, the deterioration condition of the boiler tube is periodically inspected, and trend management with respect to bulging out, reduced thickness, and the like as described above is implemented (for example, Patent Literature 1).

### [Citation List]

### [Patent Literature]

[PTL1] Japanese Patent Application Publication No. 2013-122411

### [Summary of Invention]

### [Technical Problem]

When the boiler tube is diagnosed as having creep-fatigue damage progressing and a remaining life shorter than a predetermined time period, as a result of an inspection of the deterioration condition of the boiler tube, the corresponding part of the boiler tube needs to be replaced with a new boiler tube. However, such replacement of the boiler tube requires operations of cutting and welding the boiler tube, and thus a shutdown period of the boiler for power generation may be prolonged.

Accordingly, an aspect of the present disclosure is to provide a boiler tube reinforcement device and a boiler tube reinforcement method capable of increasing a life of a boiler tube with creep-fatigue damage.

### [Solution to Problem]

A main aspect of the present disclosure to solve the above-described problems is boiler tube reinforcement device configured to reinforce a boiler tube, the boiler tube including a first boiler tube, a second boiler tube, and a weld portion, the weld portion joining edges of the first boiler tube and the second boiler tube together, the boiler tube reinforcement device including: a sheet-shaped first steel plate configured to be wrapped in a region including the weld portion of the boiler tube, to reinforce the boiler tube, the first steel plate including a plurality of bending portions, the bending portions being formed along a longitudinal direction of the boiler tube and formed at regular intervals along a circumferential direction of the boiler tube, so that the first steel plate is easily wrapped in the region of the boiler tube.

Other features of the present disclosure will become apparent from descriptions of the accompanying drawings and of the present specification.

### [Advantageous Effects]

According to the present disclosure, it becomes possible to reinforce a boiler tube so as to minimize thermal stress (bending force, etc.) of a weldportion in the boiler tube, thereby being able to increase a life of the boiler tube as well as enhance safety of a power plant.

### [Brief Description of Drawings]

FIG. 1 is a perspective view illustrating an example of thermal stress and a boiler tube according to an embodiment of the present disclosure.
FIG. 2 is a perspective view illustrating an example when a steel strip is wound on a circumferential weldportion according to an embodiment of the present disclosure.
FIG. 3 is a perspective view illustrating an example of a state where a steel strip has been wound on a circumferential weld portion according to an embodiment of the present disclosure.
FIG. 4 is a cross-sectional view illustrating an example of an XZ cross-section of a steel strip according to an embodiment of the present disclosure.
FIG. 5 is a plan view illustrating an example of a reinforcement steel plate according to a first embodiment.
FIG. 6 is a perspective view illustrating an example when a reinforcement steel plate according to a first embodiment is wrapped over a steel strip.
FIG. 7 is a perspective view illustrating an example of a state where a reinforcement steel plate according to a first embodiment has been wrapped.
FIG. 8 is a perspective view illustrating an example when a steel strip according to a first embodiment is wound over a reinforcement steel plate.
FIG. 9 is a plan view illustrating an example of a reinforcement steel plate according to a second embodiment.

### [Description of Embodiments]

At least the following matters will become apparent from descriptions of the present specification and of the accompanying drawings.

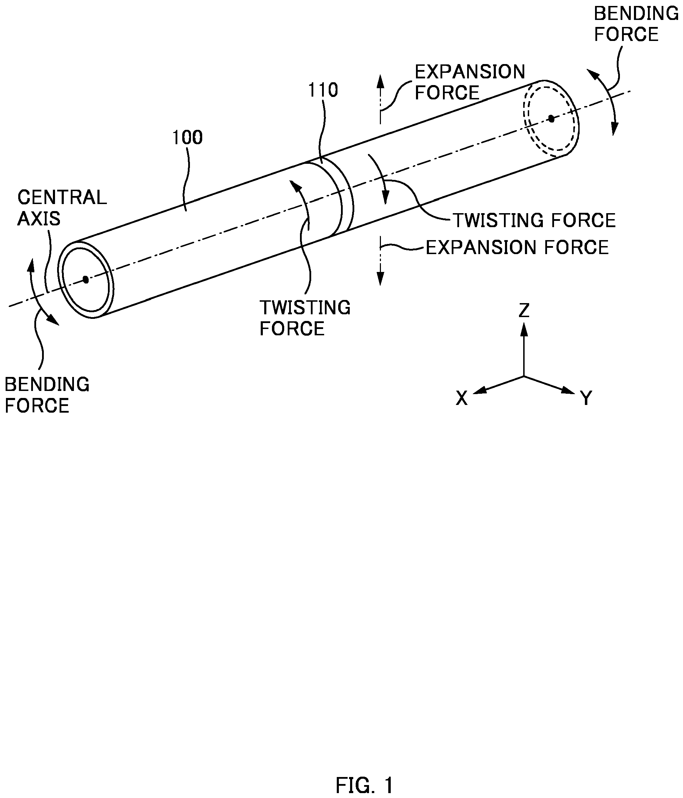

Note that, in the following description, an X-axis is an axis along a longitudinal direction of the boiler tube, and a YZ-plane formed with a Y-axis and a Z-axis is a surface parallel to a cross-section of the boiler tube. It should be noted that a description will be made while the same parts or elements in FIGS. 1 to 9 are given the same reference numerals.

### ===First Embodiment===

For example, in a thermal power plant, a fuel such as coal is supplied to a boiler to generate heat within the boiler. The generated heat is provided to fluid circulating through pipes in a water-cooled wall, a superheater, a reheater, etc., in the boiler, to obtain high temperature and high pressure gas by evaporating, superheating, and reheating. Such high temperature and high pressure gas is used to drive a steam turbine, etc.

In the above-described process of power generation, the high temperature and high pressure fluid or gas (hereinafter, referred to as "thermal fluid") circulates through boiler tubes. Since thermal stress is generated in such boiler tubes by thermal fluid, creep-fatigue damage may be caused therein.

Thermal stress indicates stress that acts on the boiler tube according to such a force that the boiler tube will expand or contract, for example, with heat obtained from the thermal fluid circulating through the boiler tube. In specific, for example, in the case where both ends of the boiler tube are fixed, free expansion of the boiler tube is restricted when the boiler tube is heated. This causes an expansion force due to thermal stress to act on the boiler tube. Further, in the case where both ends of the boiler tube are fixed and the boiler has a bend, a bending force or twisting force caused by thermal stress acts particularly on or around such a bend portion due to free expansion of the boiler tube when heated.

Creep-fatigue damage indicates damage caused by creep deformation of the boiler tube. Creep deformation indicates a phenomenon where, for example, in a high-temperature environment, when the boiler tube is under a predetermined stress, the boiler tube deforms with time. That is, creep-fatigue damage may be caused in the boiler tube by the above-described thermal stress under high-temperature environment of a power plant.

Accordingly, the reinforcement device according to an embodiment of the present disclosure is provided to an outer peripheral surface including a circumferential weld portion of the boiler tube so as to minimize such expansion force, bending force, and twisting force caused by thermal stress, for example, to prevent the creep-fatigue damage in the circumferential weld portion of the boiler tube, thereby reinforcing the boiler tube.

### ===Configuration of Reinforcement Device===

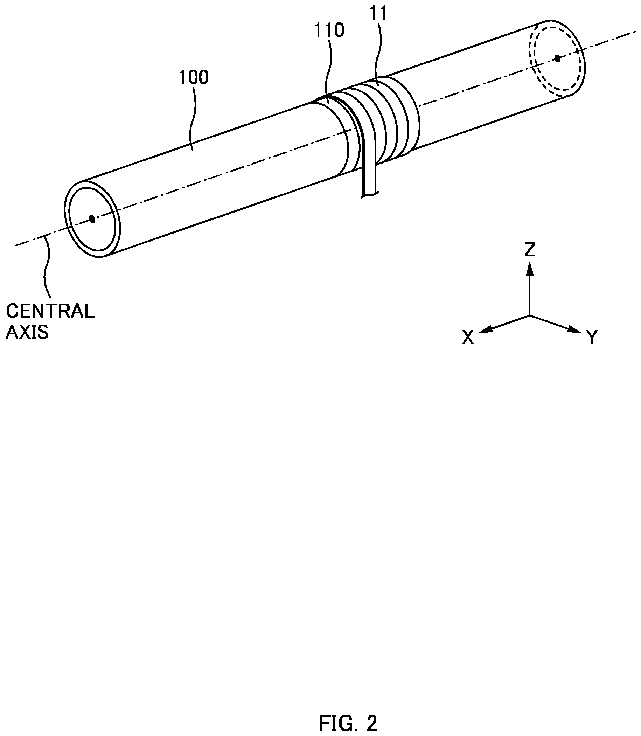

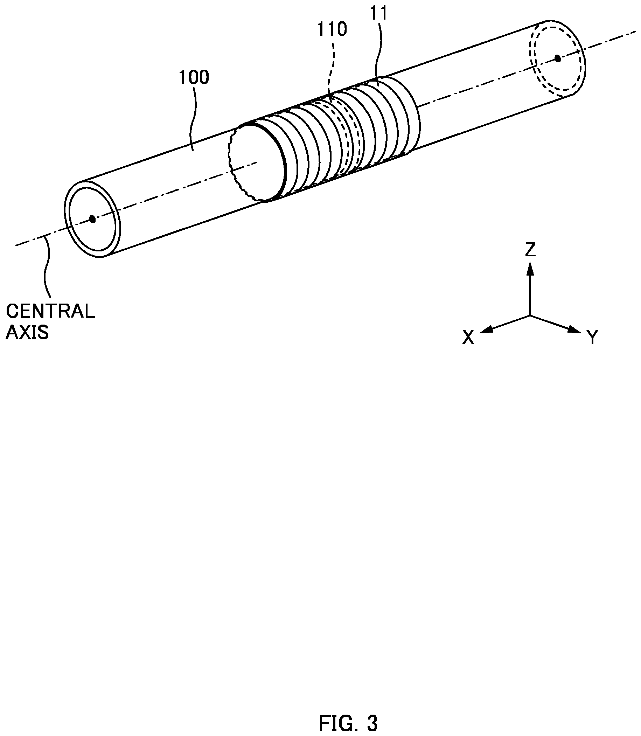

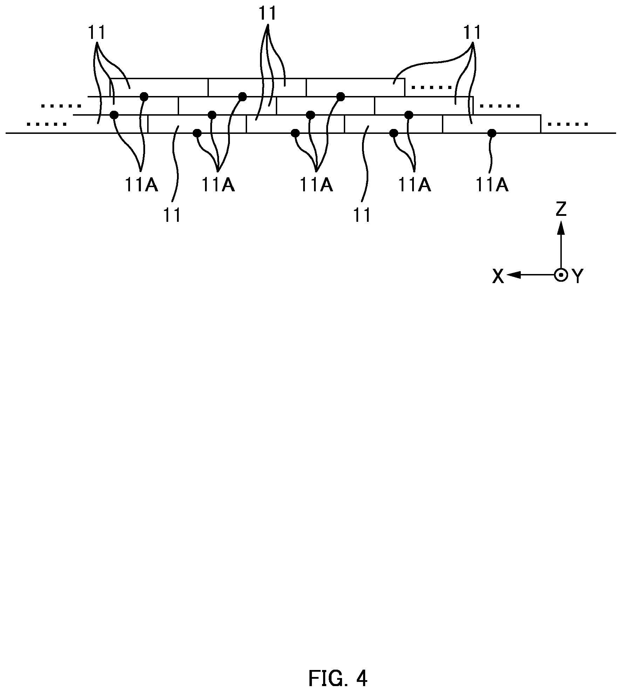

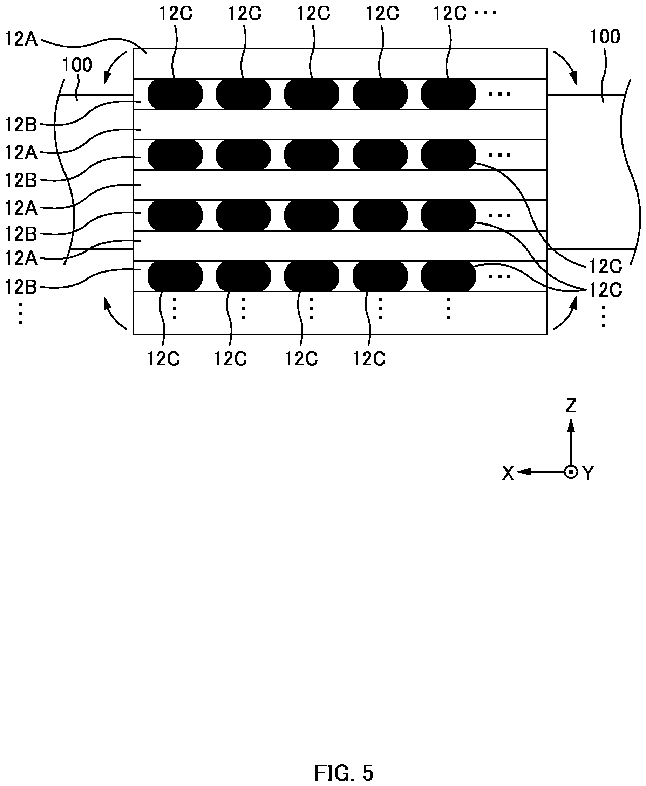

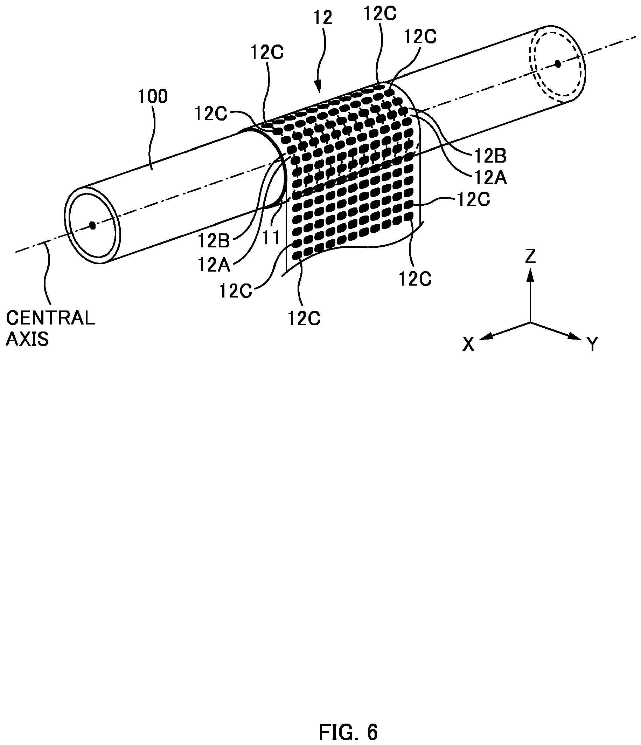

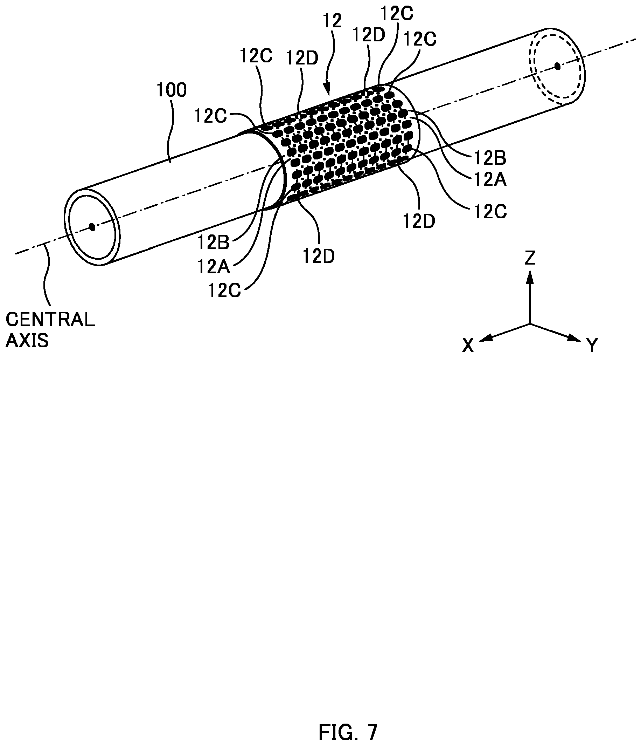

FIG. 1 is a perspective view illustrating an example of thermal stress and a boiler tube 100 according to an embodiment of the present disclosure. FIG. 2 is a perspective view illustrating an example when a steel strip 11 is wound on a circumferential weld portion according to an embodiment of the present disclosure . FIG. 3 is a perspective view illustrating an example of a state where the steel strip 11 has been wound on the circumferential weld portion according to an embodiment of the present disclosure . FIG. 4 is a cross-sectional view illustrating an example of an XZ cross-section of the steel strip 11 according to an embodiment of the present disclosure. FIG. 5 is a plan view illustrating an example of a reinforcement steel plate (sheet) 12 according to a first embodiment. FIG. 6 is a perspective view illustrating an example when the reinforcement steel plate 12 according to the first embodiment is wrapped on the steel strip 11. FIG. 7 is a perspective view illustrating an example of a state where the reinforcement steel plate 12 according to the first embodiment has been wrapped.

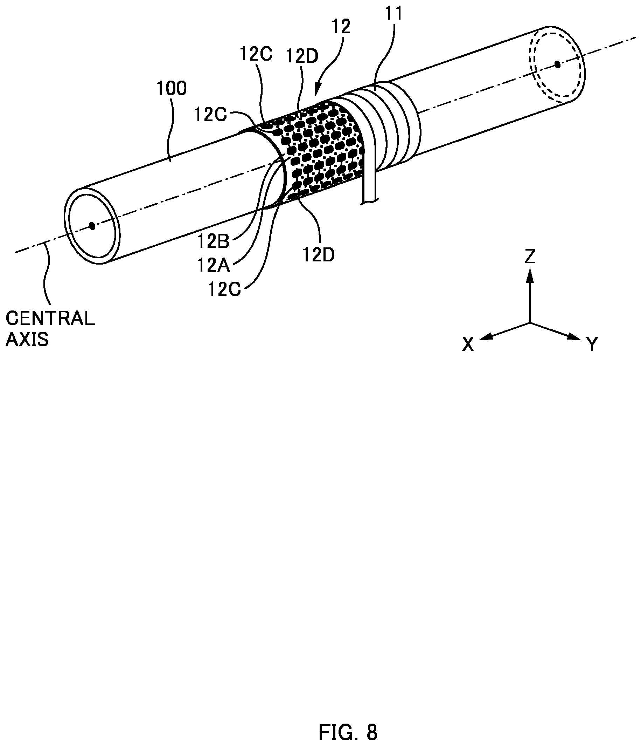

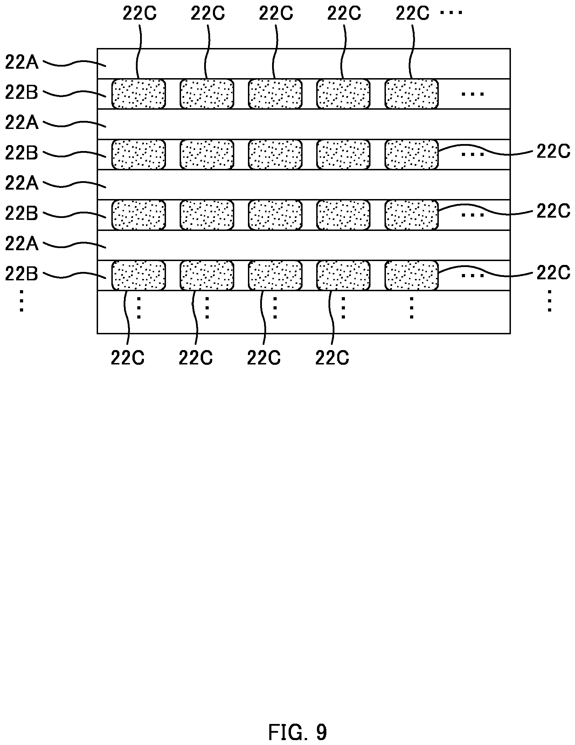

FIG. 8 is a perspective view illustrating an example when the steel strip 11 according to the first embodiment is wound over the reinforcement steel plate 12. FIG. 9 is a plan view illustrating an example of the reinforcement steel plate 12 according to a second embodiment.

Hereinafter, a reinforcement device 10 according to the first embodiment will be described with reference to FIGS. 1 to 8.

The reinforcement device 10 is a device to reinforce the boiler tube 100 by being wound/wrapped on an outer peripheral surface of the boiler tube 100, so that creep-fatigue damage of the boiler tube 100 caused by thermal stress is minimized. Here, being wound/wrapped indicates being wound/wrapped in a region corresponding to one turn on a peripheral surface (360 degrees about the central axis), in the peripheral surface furthest from the central axis in a cross section (YZ-plane) of the boiler tube 100. The same applies to the following description. As illustrated in FIG. 1, the boiler tube is applied with the expansion force, bending force, and twisting force, caused by thermal stress . The expansion force indicates a force in a direction from the central axis of the boiler tube 100 toward a peripheral surface of the boiler tube 100. The bending force indicates a force with which the boiler tube 100 is to bend in any direction vertical to a longitudinal direction (X-direction) of the boiler tube 100. The twisting force indicates a force in a direction of the peripheral surface. The boiler tube 100 is made of, for example, heat-resistant steel (e.g., low-alloy steel, high-alloy steel, carbon steel, and stainless steel), and has a cylindrical shape. Further, the boiler tube 100 to which the reinforcement device 10 is mounted includes a circumferential weld portion 110 resulting from welding between openings at edges of the boiler tube 100.

The reinforcement device 10 is wrapped around the boiler tube 100 so as to straddle this circumferential weld portion 110, to reinforce the boiler tube 100 so that the thermal stress is minimized. Note that the reinforcement device 10 according to the first embodiment needs to be designed in advance corresponding to the outer diameter of the boiler tube 100. As illustrated in FIGS. 2 to 8, the reinforcement device 10 includes the steel strip 11 and the reinforcement steel plate 12.

### <<Steel Strip 11>>

The steel strip 11 will be described with reference to FIGS. 2, 3, and 4.

The steel strip 11 is a member to be wound on an outer peripheral surface of the boiler tube 100, for example, so as to reinforce the circumferential weld portion 110 against thermal stress. The steel strip 11 is, for example, a member to minimize particularly the expansion force and twisting force among the forces caused by the thermal stress generated in the boiler tube 100 in a state where the steel strip 11 has been wound on the outer peripheral surface of the boiler tube 100. The steel strip 11 has, for example, a belt shape with a width of about 3 cm and a thickness of about 0.3 mm, and is made of heat-resistant steel (for example, stainless steel SUS316, SUS304).

As illustrated in FIGS. 2 and 3, the steel strip 11 is wound on the outer peripheral surface of the boiler tube 100 so as to straddle the circumferential weld portion 110 of the boiler tube 100. As illustrated in FIG. 4, the steel strip 11 is, for example, wound so as to be arranged in parallel, while being shifted in the longitudinal direction (X-direction) of the boiler tube 100 so as not to create unevenness. Further, the steel strip 11 is laminated in a direction away from the central axis of the boiler tube 100. That is, the steel strip 11 makes surface contact with the boiler tube 100, and is wound in parallel and multiple manner. Further, the steel strip 11 is spot-welded and fixed at welding points 11A in order to fix such a laminated state. Note that FIG. 4 is a diagram illustrating a cross section of the steel strip 11 when the boiler tube 100 in FIG. 5 is cut along the XZ plane.

As described above, the steel strip 11 is in surface contact with the boiler tube 100 and is wound in parallel. This can minimize the expansion force caused by thermal stress in the boiler tube 100. Further, the steel strip 11 is welded to the boiler tube 100 and the steel strip 11 is also welded between the upper and lower sides where the parts of the steel strip 11 are laminated. This can minimize the twisting force caused by thermal stress in the boiler tube 100. As illustrated in FIG. 4, however, the parts of the steel strip 11 are not welded in a direction along the X-axis. As a consequence, the bending force caused by thermal stress of the boiler tube 100 may not be able to be minimized. This makes it difficult to sufficiently reinforce the boiler tube 100 with the use of the steel strip 11 alone. Accordingly, the reinforcement device 10 is configured such that the reinforcement steel plate 12, which will be described later, is further wrapped over the steel strip 11, so as to be able to minimize the bending force, against which reinforcement is not sufficient with the steel strip 11 alone.

In the above description, the steel strip 11 has been described as being wound in parallel so as not to form unevenness, but it is not limited thereto. For example, the steel strip 11 may be wound in parallel such that parts of the steel strip 11 adjacent to each other along the X-axis overlap each other or the steel strip 11 may be wound with a slight gap between the parts of the steel strip 11. Further, in the above description, the steel strip 11 has been described as being wound in a multiple manner so as to be laminated, but it is not limited thereto . For example, the steel strip 11 may be wrapped with one layer, as long as being wrapped with the steel strip 11 and the reinforcement steel plate 12, which will be described later, in alternate and multiple manner. Further, in the above description, the steel strip 11 is described as having a width of about 3 cm and a thickness of about 0.3 mm, but it is not limited thereto. The width and the thickness of the steel strip 11 are not to be limited, but these numerical values are preferable values based on the result of design. Further, in the above description, the steel strip 11 is described as being made of a stainless steel material, but it is not limited thereto. For example, any material may be used as long as the material is higher in strength against thermal stress and is more stable against corrosion than the material of the boiler tube 100.

### <<Reinforcement Steel Plate 12>>

The reinforcement steel plate 12 according to the first embodiment will be described with reference to FIGS. 5, 6, 7, and 8. Note that, for convenience of explanation, boundaries between thick steel portions 12A and thin steel portions 12B are depicted by solid lines in FIG. 5, while the boundaries are expressed without using the solid line in FIGS. 6 to 8, however, it is assumed that all the reinforcement steel plates 12 illustrated in FIGS. 5 to 8 are the same. Note that the above-mentioned solid lines are illustrated to aid understanding of the boundaries between the thick steel portions 12A and the thin steel portions 12B, and the lines do not actually exist. Further, for convenience of explanation, in FIGS 6 to 8, only representative reference numerals are shown for the reference numerals indicating the thick steel portions 12A, the thin steel portions 12B, holes 12C, and welding points 12D.

The reinforcement steel plate 12 is, for example, a member to reinforce the circumferential weldportion 110 against thermal stress by being wrapped over the steel strip 11 that has been wound on the outer peripheral surface of the boiler tube 100. The reinforcement steel plate 12 is, for example, a member to minimize particularly the bending force among the forces caused by thermal stress generated in the boiler tube 100, in a state where the reinforcement steel plate 12 is wrapped over the steel strip 11 around the boiler tube 100. That is, the reinforcement steel plate 12 is a member to be wrapped over the steel trip 11 to reinforce the boiler tube 100 against the bending force, which is not easily suppressed by the steel strip 11. Further, as illustrated in FIG. 8, in the reinforcement device 10, the steel strip 11 may be further wrapped over the reinforcement steel plate 12, to enhance reinforcement effect. Furthermore, the reinforcement device 10 maybe configured such that the steel strip(s) 11 and the reinforcement steel plate(s) 12 are alternately laminated.

The reinforcement steel plate 12 is, for example, sheet-shaped, and made of heat-resistant steel (for example, stainless steel SUS316 and SUS304). The size of the reinforcement steel plate 12 is not limited thereto, as long as having a size capable of covering a region including the steel strip 11 or the circumferential weldportion 110. As illustrated in FIG. 5, the reinforcement steel plate 12 includes, for example, thick steel portions 12A and thin steel portions 12B.

The thick steel portions 12A are, for example, portions to reinforce the boiler tube 100 against the bending force caused by thermal stress, so as to supplement the reinforcement effect of the steel strip 11 against thermal stress. As illustrated in FIG. 5, the thick steel portions 12A are formed along the longitudinal direction (X-direction) of the boiler tube 100 as well as formed at regular intervals along the circumferential direction of the boiler tube 100, in a state where the reinforcement steel plate 12 is mounted to the boiler tube 100. That is, the thick steel portions 12A are formed along the longitudinal direction (X-direction) of the boiler tube 100 in a striped manner, in a state where the reinforcement steel plate 12 has been mounted to the boiler tube 100. If the thick steel portions 12A are too thick, the reinforcement steel plate 12 may not be welded to the steel strip 11. Whereas, if the thick steel portions 12A are too thin, the boiler tube 100 may not be reinforced against the bending force caused by the thermal stress. Accordingly, it is preferable that the thick steel portions 12A are thicker than the thin steel portions 12B, which will be described later, and have a thickness of, for example, about 0.3 mm. As a method of fixing the thick steel portions 12A to the steel strip 11, employed is, for example, a method of spot-welding at regular intervals from a surface opposite to the surface contacting the steel strip 11, in a state where the reinforcement steel plate 12 has been wrapped over the steel strip 11. In specific, as illustrated in FIG. 7, the thick steel portions 12A and the steel strip 11 are fixed by spot welding at welding points 12D where the thick steel portions 12A and the steel strip 11 are in surface contact with each other. It is preferable that the welding points 12D are provided at regular intervals along the X-axis and along the peripheral surface, to reduce bias in thermal stress, and provided so as not to overlap with the holes 12C in the circumferential direction, to perform welding at a place having higher strength. As described above, in order to supplement the reinforcement effect of the steel strip 11, with which suppression of the bending force is difficult since welding is not performed with respect to the X-direction, the thick steel portions 12A are provided in the X-direction in a continuous manner in the reinforcement steel plate 12. This can minimize the bending force.

The thin steel portions 12B are, for example, portions to facilitate wrapping when the reinforcement steel plate 12 is wrapped around the boiler tube 100. The thin steel portions 12B are, as illustrated in FIG. 5, formed along the longitudinal direction (X-direction) of the boiler tube 100 as well as formed at regular intervals along the circumferential direction of the boiler tube 100, in a state where the reinforcement steel plate 12 is mounted to the boiler tube 100. That is, the thin steel portions 12B are mounted to form a striped pattern along the longitudinal direction (X-direction) of the boiler tube 100, in a state where the reinforcement steel plate 12 has been mounted to the boiler tube 100. If the thin steel portions 12B are too thick, the reinforcement steel plate 12 may not be bent flexibly, so that the reinforcement steel plate 12 may not be able to be wrapped around the boiler tube 100. Accordingly, it is preferable that the thin steel portions 12B have a thickness of, for example, 0.3 mm or less. The thin steel portions 12B are provided with the holes 12C which will be described later.

The holes 12C are, for example, portions to facilitate wrapping when the reinforcement steel plate 12 is wrapped around the boiler tube 100. The holes 12C are portions provided in the thin steel portions 12B, so that the thin steel portions 12B are bent more flexibly. The holes 12C each have, for example, a substantially quadrangular shape with rounded corners. As illustrated in FIG. 5, the holes 12C are provided within the thin steel portions 12B, and the holes 12C are provided continuously at regular intervals along the longitudinal direction (X-direction) of the boiler tube 100. It is preferable that each interval between the holes 12C is as narrow as possible to facilitate flexibly bending at the thin steel portions 12B. Further, the size of the holes 12C is not limited thereto, as long as the holes 12C are provided within the range of the thin steel portions 12B.

In the above description, the reinforcement steel plate 12 is described as being wrapped over the steel strip 11, but it is not limited thereto. For example, the reinforcement steel plate 12 may be directly wrapped around the boiler tube 100, to weld and fix the thick steel portions 12A of the reinforcement steel plate 12. Further, in the above description, the reinforcement steel plate 12 is described as being made of a stainless steel material, but it is not limited thereto. For example, any material may be used, as long as it has higher strength against thermal stress and is more stable against corrosion than the material of the boiler tube 100. Further, in the above description, the thick steel portions 12A of the reinforcement steel plate 12 are described as having a thickness of about 0.3 mm, but it is not limited thereto. The thickness of the thick steel portions 12A is not limited thereto, as long as it ensures the strength to reinforce the boiler tube 100 against the thermal stress. Further, in the above description, spot welding is performed at the thick steel portions 12A, but it is not limited thereto. For example, welding may be performed at the thin steel portions 12B. In the above description, the shape of the holes 12C is described as having a substantially quadrangular shape, but it is not limited thereto. For example, the shape may be oval, and the shape having rounded corners is preferable.

### ===Usage Procedure===

Hereinafter, a procedure of using the reinforcement device 10 according to the first embodiment will be described.

A worker checks the circumferential weld portion 110 of the boiler tube 100, to check the deterioration condition of a surrounding region including the circumferential weld portion 110. At this time, the worker checks the presence/absence of irregularities, flaws, cracks, etc. in the boiler tube 100. When the boiler tube 100 is ready to be mounted with the reinforcement device 10, the worker starts mounting work of the reinforcement device 10.

The worker welds and fixes a short side portion (not shown) of the steel strip 11 to the boiler tube 100. The position at which the short side portion is welded is determined considering the length of the steel strip 11 and the position of the circumferential weld portion 110. After the short side of the steel strip 11 and the boiler tube are welded and fixed to each other, the steel strip 11 is wound along the circumferential surface of the boiler tube 100. Winding of the steel strip 11 is performed, as illustrated in FIG. 2, by being wound around the boiler tube 100 so as to be disposed in parallel along the longitudinal direction of the boiler tube 100, and welded to the boiler tube 100 at regular intervals. By conducting the above work, the steel strip 11 is mounted to the boiler tube 100 to straddle the circumferential weld portion 110.

When the steel strip 11 has been mounted, the worker winds the reinforcement steel plate 12 over the steel strip 11. At this time, the worker welds and fixes the thick steel portions 12A to the steel strip 11 such that the direction along the thick steel portions 12A of the reinforcement steel plate 12 and the longitudinal direction (X direction) of the boiler tube 100 are aligned to each other. The worker wraps the reinforcement steel plate 12, over the steel strip 11, around the boiler tube 100 and welds the reinforcement steel plate 12 at regular intervals to fix it to the steel strip 11. When the reinforcement steel plate 12 has been mounted, the worker further winds the steel strip 11 on the reinforcement steel plate 12. The above operations are repeated to reinforce the boiler tube 100.

Due to the above-described mounting work, the boiler tube 100 can minimize the occurrence of creep fatigue damage, etc., caused by the expansion force, bending force, and twisting force resulting from thermal stress.

### ===Second Embodiment===

The reinforcement device 10 according to a second embodiment is different, in only the structure of a reinforcement steel plate (sheet) 22, from the reinforcement device 10 according to the first embodiment. Thus, in the following description, only a reinforcement steel plate 22 will be described, while the descriptions of the steel strip 11 and a usage procedure is omitted as being the same as those in the reinforcement device 10 according to the first embodiment. Further, for convenience of explanation, when describing the reinforcement steel plate 22 according to the second embodiment with reference to FIGS. 2 to 8, description will be given with the reinforcement steel plate 12 according to the first embodiment in FIGS. 2 to 8 being substituted with the reinforcement steel plate 22 according to the second embodiment.

### ==Configuration of Reinforcement Device==

As illustrated in FIGS. 2 to 9, the reinforcement device 10 according to the second embodiment includes the steel strip 11 and the reinforcement steel plate 22.

### <<Reinforcement Steel Plate 22>>

The reinforcement steel plate 22 according to a second embodiment will be described with reference to FIGS. 5, 6, 7, and 9. Note that, for convenience of explanation, boundaries between thick steel portions 22A and thin steel portions 22B are depicted by solid lines in FIG. 9, however, the solid lines are illustrated to aid understanding of the boundaries between the thick steel portions 22A and the thin steel portions 22B, and the lines do not actually exist.

The reinforcement steel plate 22 is, for example, a member to reinforce the circumferential weldportion 110 against thermal stress by being wrapped over the steel strip 11 that has been wound around the boiler tube 100. The reinforcement steel plate 22 is, for example, a member to minimize particularly the bending force among the forces caused by thermal stress generated in the boiler tube 100, in a state where the reinforcement steel plate 22 is wrapped, over the steel strip 11, around the boiler tube 100. That is, the reinforcement steel plate 22 is a member to be wrapped over the steel trip 11, to reinforce the boiler tube 100 against the bending force, which is not easily suppressed with the steel strip 11. Further, as illustrated in FIG. 8, in a reinforcement device 22, the steel strip 11 may be further wound over the reinforcement steel plate 12, to enhance reinforcement effect. Furthermore, the reinforcement device 20 may be configured such that the steel strip(s) 11 and the reinforcement steel plate(s) 22 are alternately laminated.

The reinforcement steel plate 22 is, for example, sheet-shaped, and is made of heat-resistant steel (for example, stainless steel SUS316 and SUS304). The size of the reinforcement steel plate 22 is not limited thereto, as long as the size is capable of covering a region including the steel strip 11 or the circumferential weldportion 110. As illustrated in FIG. 9, the reinforcement steel plate 22 includes, for example, the thick steel portions 22A and the thin steel portions 22B.

The thick steel portions 22A are, for example, portions to reinforce the boiler tube 100 against the bending force caused by thermal stress, so as to supplement the steel strip 11 against thermal stress. As illustrated in FIG. 9, the thick steel portions 22A are formed along the longitudinal direction (X-direction) of the boiler tube 100 as well as formed at regular intervals along the circumferential direction of the boiler tube 100, in a state where the reinforcement steel plate 22 is mounted to the boiler tube 100. That is, the thick steel portions 22A are formed along the longitudinal direction (X-direction) of the boiler tube 100 in a striped manner, in a state where the reinforcement steel plate 22 has been mounted to the boiler tube 100. If the thick steel portions 22A are too thick, the reinforcement steel plate 22 may not be welded to the steel strip 11. Whereas, if the thick steel portions 22A are too thin, the boiler tube 100 may not be reinforced against the bending force caused by the thermal stress. Accordingly, it is preferable that the thick steel portions 22A are thicker than the thin steel portions 22B, which will be described later, and have a thickness of, for example, about 0.3 mm. As a method of fixing the thick steel portions 22A to the steel strip 11, employed is a method of spot-welding at regular intervals from a surface opposite to the surface contacting the steel strip 11, in a state where the reinforcement steel plate 22 has been wrapped over the steel strip 11. In specific, as illustrated in FIG. 7, the thick steel portions 22A and the steel strip 11 are fixed by spot welding at welding points 12D where the thick steel portions 22A and the steel strip 11 are in surface contact with each other. It is preferable that the welding points 12D are provided at regular intervals along the X-axis and along the peripheral surface to reduce bias in thermal stress, and provided so as not to overlap with the holes 12C in the circumferential direction to perform welding at a place having higher strength. As described above, the thick steel portions 22A are provided in the X-direction in a continuous manner in the reinforcement steel plate 22, in order to supplement the reinforcement effects of the steel strip 11, with which suppression of the bending force is difficult since welding is not performed with respect to the X-direction. This can minimize the bending force.

The thin steel portions 22B are, for example, portions to facilitate wrapping when the reinforcement steel plate 22 is wrapped around the boiler tube 100. The thin steel portions 22B are, as illustrated in FIG. 9, formed along the longitudinal direction (X-direction) of the boiler tube 100 as well as formed at regular intervals along the circumferential direction of the boiler tube 100, in a state where the reinforcement steel plate 22 is mounted to the boiler tube 100. That is, the thin steel portions 22B are formed along the longitudinal direction (X-direction) of the boiler tube 100 in a striped pattern, in a state where the reinforcement steel plate 22 has been mounted to the boiler tube 100. If the thin steel portions 22B are too thick, the reinforcement steel plate 22 is not flexibly bent, so that the reinforcement steel plate 22 cannot be wrapped around the boiler tube 100. Accordingly, it is preferable that the thin steel portions 22B have a thickness of, for example, 0.3 mm or less. The thin steel portions 22B are provided with depressions 22C which will be described later.

The depressions 22C are, for example, portions to facilitate wrapping when the reinforcement steel plate 22 is wrapped around the boiler tube 100. The depressions 22C are portions provided in the thin steel portions 22B, and are to bend the thin steel portions 22B more flexibly. The depressions 22C each have, for example, a substantially quadrangular shape with rounded corners. As illustrated in FIG. 9, the depressions 22C are provided within the thin steel portions 22B, and the depressions 22C are provided continuously at regular intervals linearly along the longitudinal direction of the boiler tube 100. It is preferable that each interval between the depressions 22C is as narrow as possible, to facilitate flexibly bending at the thin steel portions 22B. Further, the size of the depressions 22C is not limited thereto, as long as the depressions 22C are provided within a range of the thin steel portions 22B.

In the above description, the reinforcement steel plate 22 is described as being wrapped over the steel strip 11, but it is not limited thereto. For example, the reinforcement steel plate 22 may be directly wrapped around the boiler tube 100, to perform welding and fixing at the thick steel portions 22A of the reinforcement steel plate 22. Further, in the above description, the reinforcement steel plate 22 is described as being made of a stainless steel material, but it is not limited thereto. For example, any material may be used, as long as it has higher strength against thermal stress and is more stable against corrosion than the material of the boiler tube 100. Further, in the above description, the thick steel portions 22A of the reinforcement steel plate 22 are described as having a thickness of about 0.3 mm, but it is not limited thereto. The thickness of the thick steel portions 22A is not limited thereto, as long as it ensures the strength to reinforce the boiler tube 100 against the thermal stress. Further, in the above description, the spot welding is performed onto the thick steel portions 22A, but it is not limited thereto. For example, welding may be performed at the thin steel portions 22B. In the above description, the shape of the depressions 22C is described as having a substantially quadrangular shape, but it is not limited thereto. For example, the shape may be oval, and it is preferable that the shape has rounded corners.

### ===Summary===

As has been described above, a reinforcement device 10 according to an embodiment of the present disclosure is a reinforcement device 10 configured to reinforce a boiler tube 100, the boiler tube 100 including a boiler tube 100 on one side, a boiler tube 100 on the other side, and a circumferential weld portion 110, the circumferential weld portion joining edges of the boiler tube 100 on one side and the boiler tube 100 on the other side together, the reinforcement device 10 comprising: a sheet-shaped reinforcement steel plate (12, 22) configured to be wrapped in a region including the circumferential weld portion 110 of the boiler tube 100, to reinforce the boiler tube 100, the reinforcement steel plate (12, 22) including a plurality of thin steel portions (12B, 22B), the thin steel portions (12B, 22B) being formed along a longitudinal direction of the boiler tube 100 and formed at regular intervals along a circumferential direction of the boiler tube 100, so that the reinforcement steel plate (12, 22) is easily wrapped in the region including the circumferential weld portion 110 of the boiler tube 100. According to an embodiment of the present disclosure, it is possible to reinforce the boiler tube 100 against the expansion force and the bending force among thermal stresses. This can suppress creep-fatigue damage of the boiler tube 100, thereby being able to enhance safety of a facility.

Further, in the reinforcement device 10 according to an embodiment of the present disclosure, the reinforcement steel plate (12, 22) is formed to have a thickness, at positions of the plurality of thin steel portions (12B, 22B), smaller than a thickness at thick steel portions (12A, 22A) other than the thin steel portions (12B, 22B). According to an embodiment of the present disclosure, it is possible to wind the reinforcement device 10 around the boiler tube 100, while maintaining the reinforcement strength of the boiler tube 100 against thermal stress, thereby being able to enhance work efficiency.

Further, in the reinforcement device 10 according to an embodiment of the present disclosure, the plurality of thin steel portions 12B each include a plurality of holes 12C, the holes 12C being formed at regular intervals along the longitudinal direction of the boiler tube 100. According to an embodiment of the present disclosure, it is possible to facilitate winding of the reinforcement device 10 around the boiler tube 100 while maintaining the reinforcement strength of the boiler tube 100 against thermal stress, thereby being able to enhance work efficiency.

Further, in the reinforcement device 10 according to an embodiment of the present disclosure, the plurality of thin steel portions 22B each include a plurality of depressions 22C, the depressions 22C being formed at regular intervals along the longitudinal direction of the boiler tube 100. According to an embodiment of the present disclosure, it is possible to facilitate winding of the reinforcement device 10 around the boiler tube 100 while maintaining the reinforcement strength of the boiler tube 100 against thermal stress, thereby being able to enhance work efficiency.

Further, the reinforcement device 10 according to an embodiment of the present disclosure, further comprises: a band-shaped steel strip 11 configured to be wound in the region including the circumferential weld portion 110 of the boiler tube 100, to reinforce the boiler tube 100, wherein the reinforcement steel plate (12, 22) is wrapped over the steel strip 11 as well as welded to the steel strip 11. According to an embodiment of the present disclosure, it is possible to reinforce the boiler tube 100 against the twisting force in addition to the expansion force and bending force, among thermal stresses. This can suppress creep-fatigue damage of the boiler tube 100, thereby being able to enhance safety of a facility.

Further, in the reinforcement device 10 according to an embodiment of the present disclosure, the reinforcement steel plate (12, 22) and the steel strip 11 are alternately wound or wrapped on the boiler tube 100. According to an embodiment of the present disclosure, it is possible to suppress creep-fatigue damage of the boiler tube 100 more and enhance safety of a facility more, as compared with a case of single winding.

The embodiments are intended for easy understanding of the present disclosure and are not in any way to be construed as limiting the present disclosure. The present disclosure may be modified and improved without departing from the scope of the disclosure, and equivalents thereof are also encompassed by the disclosure.

### [Reference Signs List]

- 10: reinforcement device
- 11: steel strip
- 12: reinforcement steel plate
- 12A: thick steel portion
- 12B: thin steel portion
- 12C: hole
- 12D: welding point
- 22: reinforcement steel plate
- 22A: thick steel portion
- 22B: thin steel portion
- 22C: depression
- 100: boiler tube
- 110: circumferential weld portion

## Claims

1. A boiler tube reinforcement device configured to reinforce a boiler tube, the boiler tube including a first boiler tube, a second boiler tube, and a weld portion, the weld portion joining edges of the first boiler tube and the second boiler tube together, the boiler tube reinforcement device comprising:
a sheet-shaped first steel plate configured to be wrapped in a region including the weld portion of the boiler tube, to reinforce the boiler tube,
the first steel plate including a plurality of bending portions, the bending portions being formed along a longitudinal direction of the boiler tube and formed at regular intervals along a circumferential direction of the boiler tube, so that the first steel plate is easily wrapped in the region of the boiler tube.

2. The boiler tube reinforcement device according to claim 1, wherein
the first steel plate is formed to have a thickness, at positions of the plurality of bending portions, smaller than a thickness at positions other than the plurality of bending portions.

3. The boiler tube reinforcement device according to claim 1 or 2, wherein
the plurality of bending portions each include a plurality of holes, the holes being formed at regular intervals along the longitudinal direction of the boiler tube.

4. The boiler tube reinforcement device according to claim 1 or 2, wherein
the plurality of bending portions each include a plurality of depressions, the depressions being formed at regular intervals along the longitudinal direction of the boiler tube.

5. The boiler tube reinforcement device according to any one of claims 1 to 4, further comprising:
a strip-shaped second steel plate configured to be wound in the region of the boiler tube, to reinforce the boiler tube, wherein
the first steel plate is wrapped on the second steel plate as well as welded to the second steel plate.

6. The boiler tube reinforcement device according to claim 5, wherein
the first steel plate is wrapped and the second steel plate is wound, alternately, on the boiler tube.

7. A method for reinforcing a boiler tube, the boiler tube including a first boiler tube, a second boiler tube, and a weld portion, the weld portion joining edges of the first boiler tube and the second boiler tube, the method comprising:
winding a sheet-shaped first steel plate in a region including the weld portion of the boiler tube, the first steel plate including a plurality of bending portions, the bending portions being formed along a longitudinal direction of the boiler tube as well as formed at regular interval along a circumferential direction of the boiler tube, so that the first steel plate is easily wrapped in the region of the boiler tube.
